# EUROPÄISCHE PATENTANMELDUNG

(11) **EP 2 607 772 A1**
(43) Veröffentlichungstag der Anmeldung: **26.06.2013**
(21) Anmeldenummer: 12194263.5
(22) Anmeldetag: 26.11.2012
(51) Int. Cl.: F16L 59/04, F01N 3/20, F01N 13/14

(54) **Isolierte Abgasleitung für eine Brennkraftmaschine**

(30) Priorität: 19.12.2011 DE 102011121383
(71) Anmelder: Benteler Automobiltechnik GmbH, 33102 Paderborn (DE)
(72) Erfinder: Merschkötter, Stefan, 33098 Paderborn (DE)
(74) Vertreter: Ksoll, Peter

(57) **Zusammenfassung**

Die Erfindung beschreibt eine an sich bekannte isolierte Abgasleitung für eine Brennkraftmaschine, die ein Abgas führendes inneres Rohr und ein das innere Rohr mit Abstand ummantelndes äußeres Rohr aufweist, wobei in dem Spalt zwischen dem inneren und dem äußeren Rohr ein mikroporöses fließ- oder schüttfähiges Isoliermaterial eingefüllt ist. Erfindungsgemäß ist die Abgasleitung nach dem Einfüllen des Isoliermaterials hydrogeformt worden, um das Isoliermaterial im Spalt auf ein notwendiges Maß zu verdichten.

## Beschreibung

Die Erfindung beschreibt eine isolierte Abgasleitung für eine Brennkraftmaschine, die ein Abgas führendes inneres Rohr und ein das innere Rohr mit Abstand ummantelndes äußeres Rohr aufweist, wobei in den Spalt zwischen dem inneren und dem äußeren Rohr ein mikroporöses fließ- oder schüttfähiges Isoliermaterial eingefüllt ist sowie ein Verfahren zum Herstellen einer solchen Abgasleitung.

Eine Abgasleitung gemäß dem Oberbegriff des Anspruchs 1 ist aus der DE 103 34 307 A1 bekannt. Ebenso offenbart die DE 103 34 307 A1 ein Verfahren zur Herstellung einer isolierten Abgasleitung für eine Brennkraftmaschine, die ein Abgas führendes inneres Rohr und ein das innere Rohr mit Abstand ummantelndes äußeres Rohr aufweist mit den Schritten gemeinsames Verformen des inneren und äußeren Rohres mittels Hydroformen, wobei nach dem Verformen beide Rohre an einer Stirnseite offen sind, Einfüllen von Isoliermaterial in den Spalt zwischen dem inneren und dem äußeren Rohr und ein Verdichten des Isoliermaterials dadurch, dass das innere und das äußere Rohr in Vibrationen versetzt werden (Rütteln). Als mikroporöse Isoliermaterialien kommen insbesondere Werkstoffe auf Basis hochdisperser Kieselsäuren in Frage. Vorzugsweise sollen diese Zusätze von Infrarot Trübungsmitteln enthalten, die zusätzlich eine Wärmeleitung durch Strahlung durch die im Isoliermaterial noch vorhandene Luft verhindern sollen. Das Einfüllen des mikroporösen Isoliermaterials findet ausdrücklich nach dem Hydroformen statt.

Genau hier liegt jedoch das Problem. Mikroporöse Isoliermaterialien müssen hoch verdichtet werden, um ihre äußerst niedrige Wärmeleitfähigkeit zu erreichen. Anderenfalls ist die Isolationswirkung nicht besser als die von Matten, die auf Basis keramischer Fasern isolieren oder als die eines luftspaltisolierten Rohres. Mikroporöse Isoliermaterialien werden daher herkömmlich unter Vakuum in eine flache Form gepresst und luftdicht umhüllt, zum Stand der Technik siehe beispielsweise die EP 0 937 939 B1. Die DE 20 2004 000 200 U1 offenbart ein Gehäuse für eine Abgasanlage in einem Kraftfahrzeug umfassend einen Gehäusemantel mit einem Einlasstrichter, bestehend aus Außenkonus, Innenkonus und einem zwischen diesen angeordneten Hohlraum, der mit mikroporösem Wärmeisolierstoff ausgefüllt ist. Die DE 20 2004 000 200 U1 beschreibt, dass neben Luftspalt isolierten doppelwandigen Konen vor allem doppelwandige Konen, die mit einem mikroporösen Isolierstoff gefüllt sind, der aus anorganischen und silikatischen Substanzen und hochdisperser Kieselsäure besteht, hervorragende Dämmeigenschaften zeigen. Dazu werden zunächst Innen- und Außenkonus mit dem dazwischen liegenden mikroporösen Isolierstoff, der zur besseren Handhabung in eine flache Form gepresst und von einer PE- Folie umhüllt ist, übereinander geschoben und durch Pressen in ihrer Lage gesichert. Hierbei handelt es sich klassisch um eine Halbschalenlösung, bei der ein Einlegen der Matte möglich ist. Wird, wie in der DE 103 34 307 A1 beschrieben, das Isoliermaterial als Schüttgut in den Luftspalt eingefüllt, liegt keine Verdichtung vor. Auch das Rütteln verdichtet das mikroporöse Isoliermaterial nicht ausreichend, weil nach wie vor Luft zwischen den einzelnen Schüttgutteilchen vorhanden ist.

Der Erfindung liegt daher ausgehend von diesem Stand der Technik die Aufgabe zugrunde, eine isolierte Abgasleitung aus einem doppelwandigen Rohr mit verbesserten Isoliereigenschaften aufzuzeigen, wobei in dem Spalt zwischen dem inneren und dem äußeren Rohr ein mikroporöses fließ- oder schüttfähiges Isoliermaterial eingefüllt ist.

Diese Aufgabe wird erfindungsgemäß mit den Merkmalen des Anspruchs 1 gelöst.

Eine isolierte Abgasleitung für eine Brennkraftmaschine weist ein Abgas führendes inneres Rohr und ein das innere Rohr mit Abstand ummantelndes äußeres Rohr auf, wobei in dem Spalt zwischen dem inneren und dem äußeren Rohr ein mikroporöses fließ- oder schüttfähiges Isoliermaterial eingefüllt ist. Erfindungsgemäß ist die Abgasleitung nach dem Einfüllen des mikroporösen Isoliermaterials hydrogeformt worden. Dadurch wird das mikroporöse Isoliermaterial im Spalt auf ein notwendiges Maß verdichtet.

Es gibt mehrere Arten, dieses erfindungsgemäße Rohr herzustellen. Zunächst wird das äußere Rohr über das innere Rohr geschoben.

In einer Ausführungsform wird der Spalt zwischen den beiden Rohren bereits jetzt mit dem mikroporösen fließ- oder schüttfähigen Isoliermaterial verfüllt. Hieran kann sich ein Rütteln des Halbzeugs anschließen, um das mikroporöse Isoliermaterial vor zu verdichten. Gegebenenfalls können beide Rohre zusammen gebogen werden, anschließend findet der Hydroformvorgang statt. Mit dem Hydroformvorgang werden sowohl das innere und das äußere Rohr in die Endkontur gebracht als auch das innere Rohr gegen das äußere Rohr verpresst. Auf diese Weise wird aus dem Spalt die nach dem Einfüllen des mikroporösen Isoliermaterials noch verbliebene Luft ausgetrieben und das mikroporöse Isoliermaterial auf das zur Erzielung einer guten Isoliereigenschaft notwendige Maß verdichtet.

In einem alternativen Herstellungsverfahren wird der Spalt zwischen beiden ineinandergeschobenen Rohren zunächst mit einem für einen Biegevorgang eines doppelwandigen Rohres und ein Hydroformverfahren typischen Füllmaterial verfüllt, welches aber nach dem fakultativen Biegevorgang und dem Hydroformen wieder aus dem Spalt entfernt wird. Jetzt wird das mikroporöse fließ- oder schüttfähige Isoliermaterial eingefüllt. Hieran kann sich ein Rütteln des Halbzeugs anschließen, um das mikroporöse Isoliermaterial vor zu verdichten. Anschließend folgt ein weiterer Hydroformvorgang, mit dem die nach dem Einfüllen des mikroporösen Isoliermaterials noch verbliebene Luft aus dem Spalt ausgetrieben und das mikroporöse Isoliermaterial auf das zur Erzielung einer guten Isoliereigenschaft notwendige Maß verdichtet wird.

In einer weiteren Herstellungsalternative werden die beiden ineinandergesteckten Rohre gegebenenfalls zunächst Wand auf Wand zusammen gebogen und dann wird das äußere Rohr durch Einleiten des Hydroformmediums in den abgedichteten Spalt vom inneren Rohr beabstandet. In den so entstandenen Spalt wird das mikroporöse fließ- oder schüttfähige Isoliermaterial eingefüllt. Hieran kann sich ein Rütteln des Halbzeugs anschließen, um das mikroporöse Isoliermaterial vor zu verdichten. Anschließend folgt ein weiterer Hydroformvorgang, mit dem die nach dem Einfüllen des mikroporösen Isoliermaterials noch verbliebene Luft aus dem Spalt ausgetrieben und das mikroporöse Isoliermaterial auf das zur Erzielung einer guten Isoliereigenschaft notwendige Maß verdichtet wird.

Bei jeder Herstellungsart können nach dem Hydroformen komplexe Geometrien mit hervorragenden Isoliereigenschaften vorliegen. Welche Herstellungsvariante eingesetzt wird, hängt von der Form und Komplexität der Endgeometrie ab. Entscheidend für die Isolierwirkung ist, dass ein Hydroformvorgang nach dem Einfüllen des mikroporösen Isoliermaterials durchgeführt wird, um das mikroporöse Isoliermaterial zu verdichten. Dies kann auch bedeuten, dass mehr als ein Hydroformvorgang an ein und demselben Bauteil vorgenommen wird. Bevorzugt wird ein Spaltvolumen des Spalts durch das Hydroformen reduziert. Dabei kann sowohl das innere Rohr aufgeblasen und so gegen das konstant gehaltene oder zu einem geringeren Prozentsatz aufgeblasene äußere Rohr verpresst werden, um das Spaltvolumen zu verringern. Alternativ kann auch das äußere Rohr mechanisch im Durchmesser reduziert werden, während das innere Rohr durch das Hydroformen im Durchmesser konstant gehalten oder vergrößert wird. Beides reduziert das Spaltvolumen nach dem Einfüllen des mikroporösen Isoliermaterials und führt so zu der notwendigen Verdichtung.

In einer bevorzugten Ausführungsform wird das erfindungsgemäß isolierte Abgasrohr im Zusammenhang mit einem Reinigungssystem für selektive katalytische Reduktion eingesetzt. Der Begriff selektive katalytische Reduktion (englisch selective catalytic reduction, SCR) bezeichnet eine Technik zur Reduktion von Stickoxiden in Abgasen von unter anderem Motoren. Die chemische Reaktion am SCR-Katalysator ist selektiv, das heißt, es werden bevorzugt die Stickoxide (NO, N02) reduziert, während unerwünschte Nebenreaktionen (wie zum Beispiel die Oxidation von Schwefeldioxid zu Schwefeltrioxid) weitgehend unterdrückt werden.

Zum Ablauf der Reaktion wird in der Regel Ammoniak (NH3) benötigt, das dem Abgas zugemischt wird. Die Produkte der Reaktion sind Wasser (H2O) und Stickstoff (N2). In der Fahrzeugtechnik wird das SCR-Verfahren bisher in erster Linie angewendet, um bei Dieselfahrzeugen die Stickoxidemissionen zu senken. Das für die SCR-Reaktion benötigte Ammoniak wird dabei nicht direkt, d. h. in reiner Form, verwendet, sondern beispielsweise in Form einer wässrigen Harnstofflösung, von der Industrie einheitlich mit AdBlue bezeichnet. Diese wässrige Lösung wird vor dem SCR-Katalysator in den Abgasstrang, z. B. mittels Dosierpumpe oder Injektor, eingespritzt. Aus der Harnstoff-Wasser-Lösung entstehen durch eine Hydrolysereaktion Ammoniak und CO2. Das so erzeugte Ammoniak kann dann in einem speziellen SCR-Katalysator bei entsprechender Temperatur mit den Stickoxiden im Abgas reagieren.

Speziell beim Einspritzen des Harnstoffs in die Abgasleitung muss sich das Abgas in einem sehr engen Temperaturfenster bewegen. Anderenfalls läuft die Katalyse nur unzureichend ab und es können sich unerwünschte Nebenprodukte bilden. Beispielsweise kann der Harnstoff kristallisieren. Insbesondere hier ist es von Vorteil, wenn die Abgas führende Abgasleitung eine gute Isolationswirkung aufweist, zumal es sich bei einem SCR Katalysator in der Regel um einen motorfernen Katalysator handelt. Zwar ist das Hydroformverfahren an sich ein kein billiges Verfahren, zur Zeit werden aber die Abgasleitungen bei Verwendung eines SCR Katalysators bereits sehr aufwändig mit Matten und Halbschalen ummantelt, ohne dass die Isolationswirkung derjenigen des mikroporösen Isoliermaterials gleichkommt, wenn es unter Vakuum verpresst worden ist. Gerade hier lohnt sich daher die Verwendung des erfindungsgemäß isolierten Abgasrohres.

Darüber hinaus ist auch eine Verwendung der erfindungsgemäß isolierten Abgasleitung bei einem Krümmer oder einem elektrisch beheizbaren Katalysator gut denkbar.

## Patentansprüche

1. Isolierte Abgasleitung für eine Brennkraftmaschine, die ein Abgas führendes inneres Rohr und ein das innere Rohr mit Abstand ummantelndes äußeres Rohr aufweist, wobei in einem Spalt zwischen dem inneren und dem äußeren Rohr ein mikroporöses fließ- oder schüttfähiges Isoliermaterial eingefüllt ist, **dadurch gekennzeichnet, dass** die Abgasleitung nach dem Einfüllen des Isoliermaterials hydrogeformt worden ist, wobei das innere Rohr gegen das äußere Rohr verpresst ist und das Isoliermaterial verdichtet ist.

2. Isolierte Abgasleitung nach Anspruch 1, **dadurch gekennzeichnet, dass** ein Spaltvolumen des Spalts durch das Hydroformen reduziert worden ist.

3. Isolierte Abgasleitung nach einem der vorangegangenen Ansprüche, **dadurch gekennzeichnet, dass** die Abgasleitung im Zusammenhang mit einem SCR- System eingesetzt wird.
